# EUROPEAN PATENT SPECIFICATION

(11) **EP 2 778 453 B1**
(45) Date of publication and mention of the grant of the patent: **13.01.2016**
(21) Application number: 14157945.8
(22) Date of filing: 05.03.2014
(51) Int. Cl.: F16D 3/223

(54) **Plug-In CVJ assembly**
Steckbare CVJ-Anordnung
Ensemble de CVJ enfichable

(30) Priority: 13.03.2013 US 201313799950
(43) Date of publication of application: 17.09.2014
(73) Proprietor: NTN Bearing Corporation of America, Mt. Prospect, IL 60056 (US)
(72) Inventor: Katke, Christopher, Redford, MI Michigan 48239 (US)
(74) Representative: Solf, Alexander

(56) References cited:
- DE-B1- 2 143 319
- GB-A- 1 339 751
- US-A- 4 132 422
- US-A1- 2007 123 358
- US-B2- 7 677 981

## Description

### FIELD OF THE INVENTION

This invention relates to a motor vehicle powertrain component, and particularly to an assembly which provides attachment between an output shaft and a constant velocity joint (CVJ) component.

### BACKGROUND OF THE INVENTION

Motor vehicle powertrain systems typically incorporate a number of components for transferring mechanical power from an internal combustion engine prime mover and its associated transmission to vehicle drive wheels. These elements, particularly in applications where rear axle drive wheels are driven via a front mounted engine, typically include a propeller shaft running longitudinally underneath the floor pan of the vehicle from the engine and transmission assembly at the front of the vehicle to a rear axle differential. As is typical for such systems, the propeller shaft includes one or more flexible joints such as conventional so-called universal joints (or U-joints), or more sophisticated articulating connections known as constant velocity joints (CVJ). A CVJ provides a smooth rotational output when an angle is formed between its input and output shaft members which contributes to reducing noise and vibration issues. This is distinguishable from conventional U-joints which induce powertrain vibrations inherent in their operation of off-axis conditions.

During the assembly of a motor vehicle it is desirable to provide fast, straightforward assembly processes which inherently enhance quality and reliability. For all components for motor vehicle applications, low-cost is a primary design criterion.

From US 4,132,422 an universal joint is known, comprising an outer joint member defining a cavity, an inner joint member disposed at least partially within said cavity ane torque transmitting means interconnecting the inner and outer joint members for torque transmission while accommodating relative angular movement therebetween. The inner joint member defines a bore therein, wherein a shaft with an end portion is removably received in said bore for torque transmission with the inner joint member. Further, a flexible sealing member for excluding contaminants from the cavity and of generally annular form. A first attachment portion is connected to the outer joint member and a second attachment portion is connected to the inner joint member. Adjacent the second attachment portion, the flexible sealing member includes a radially inwardly protruding annular bead formation including an inwardly facing surface. The shaft is provided adjacent its end portion with a formation affording an outwardly facing surface at a radius at least equal to the maximum radius of the end portion, and the surfaces sealingly engage one another when the shaft is in position in the bore.

DE 2 143 319 A discloses a sealing for an universal joint coupling having an outer coupling member and an inner coupling member, a shaft connected detachably to inner coupling member and a sealing sleeve made of an elastically deformable material, the ends of the sealing sleeve being configured in a thickened manner and associated to the respective coupling elements air-tight as well as liquid-tight. Further, bearing elements are arranged between outer coupling member and an inner coupling member for transmitting a torque. A fastener is arranged on the shaft on the inner coupling member, so that the air-tight and liquid-tight joint of the sealing sleeve with the shaft is established by axially compressing the thickened inner end of the sealing sleeve against a flange of the shaft. Furthermore, the elastic thickening is arranged directly or indirectly at the inner coupling member so that it is put under tension all-over.

### SUMMARY OF THE INVENTION

The powertrain assembly in accordance with the present invention provides a simple and accurate assembly of components which provides reliability and cost benefits over existing designs of such systems. These systems in accordance with this invention are described in the following description and appended drawing figures.

### BRIEF DESCRIPTION OF THE DRAWINGS

Figure 1 is a side pictorial view of the assembly in accordance with this invention;
Figure 2 is a longitudinal cross-sectional view through the assembly shown in Figure 1;
Figure 3 is a perspective view of the assembly in accordance with this invention; and
Figure 4 is a cross-sectional view similar to Figure 2 with the exception that the output shaft is not installed.

### DETAILED DESCRIPTION OF THE INVENTION

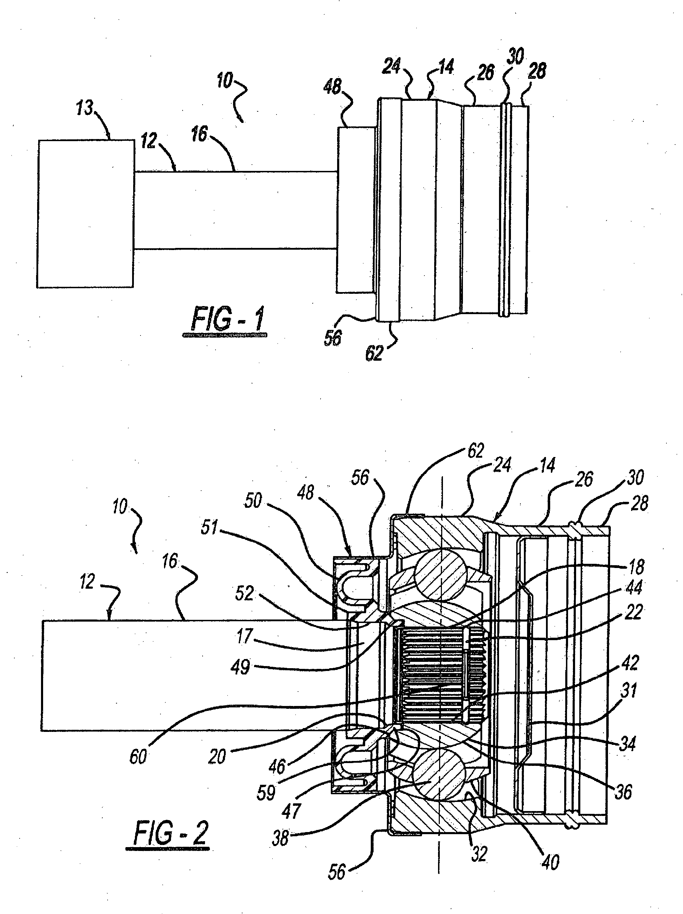

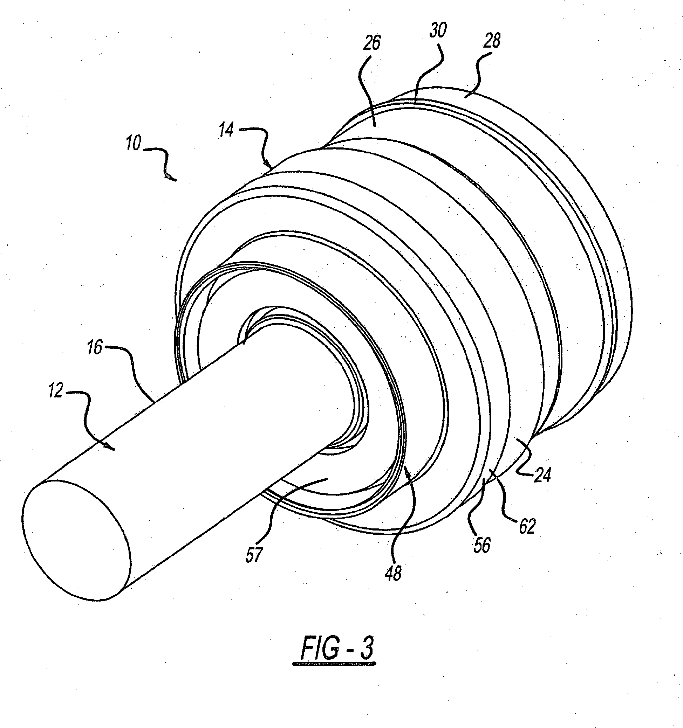

Figures 1, 2, and 3 illustrate powertrain assembly 10 in accordance with the present invention. Assembly 10 principally comprises output shaft 12 and CVJ assembly 14. With particular reference to Figure 2 output shaft 12 is illustrated which may be an output shaft from a powertrain transmission, power takeoff unit (PTU), or transfer case. Output shaft 12 forms shaft portion 16, and radial face 20 forms a transition to reduced diameter cylindrical section 17, and a further reduced diameter splined end 18. In an alternative configuration, shaft portion 16 and cylindrical section 17 may have the same diameter, or section 17 have a larger diameter, with radial face 20 formed by a localized rib or bead. Circumferential groove 22 is formed within splined end 18.

CVJ assembly 14 includes outer race 24 which has an extending tubular section 26. In one exemplary embodiment of assembly 10, tubular section 26 is friction welded to hollow propeller shaft tube 28. Figure 2 illustrates weld bead 30 formed in the welding process. Other means of fusing tubular section 26 to tube 28 may be employed, such as magnetic impeller arc butt welding (MIAB), and other techniques. Sheet metal cap 31 is pressed into the cavity formed by CVJ tubular section 26 and provides the sealing for CVJ 14.

CVJ outer race 24 forms an annular bell shaped grooved cavity surface 32. CVJ inner race 34 forms an annular crowned grooved surface 36. Ball elements 38 fit within the grooves formed by the outer race 24 and inner race 34. The interaction between the race surfaces and ball elements 38 provides the constant velocity properties of CVJ assembly 14. Ball element keeper 40 provides stability for positioning ball elements 38.

Inner race 34 forms splined bore 42 which is sized to receive splined end 18 of output shaft 12. Splined bore 42 also forms annular groove 44 which interacts with output shaft groove 22 as will be explained below. Inner race 34 further forms frustoconical shoulder 46, which axially projects from a radial step 47 via a cylindrical bore section 49. The radial step 47 widens the inner diameter from the splined bore 42 to the cylindrical bore section 49, which transitions into the frustoconical shoulder 46.

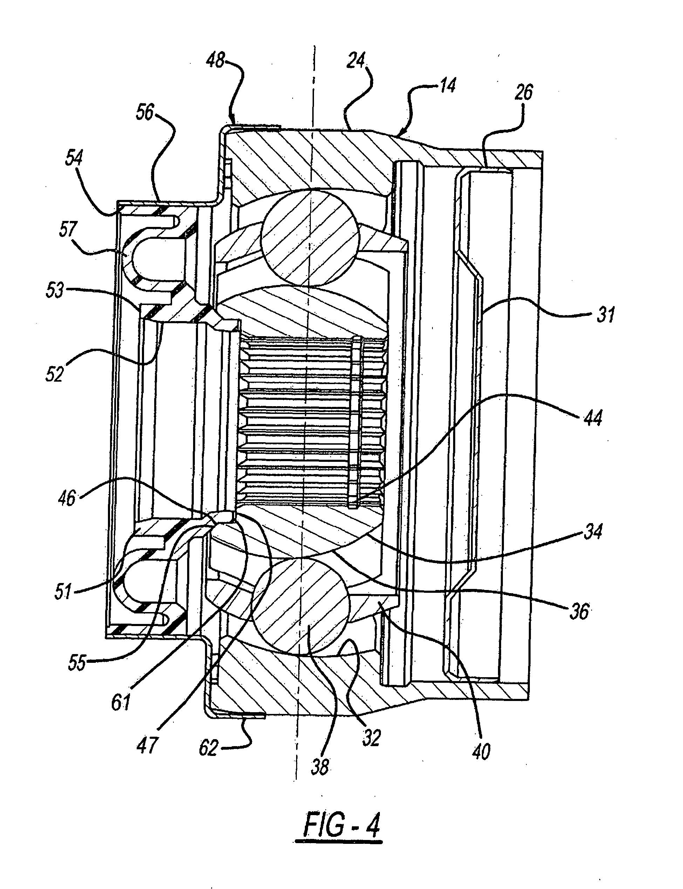

Seal assembly 48 is provided for sealing CVJ assembly 14 against contamination by water and road debris. Seal assembly 48 includes elastomeric boot 50 having inner lip 51 forming an inside cylindrical surface 52, and faces 53 and 55. Face 53 is a radial face, while face 55 is an oblique face that forms a frustoconical surface. Bellows section 57 is between the inner and outer lips 51 and 54 and seals the CVJ and accommodates angle changes between shaft 12 and outer race 24. The inner lip 51 has an axial sleeve extension 59 that extends into the cylindrical bore section 49 of the inner race 34 so that it axially overlaps with both the output shaft 16 and the inner race 34. The radially outer lip 54 of boot 50 is bonded or otherwise affixed to seal ring 56, preferably formed of sheet metal. Seal ring 56 includes outer flange 62 sized to enable it to be pressfit onto CVJ outer race 24, as shown in Figures 2 and 4.
As evident from Fig. 2, the sleeve extension 59 is held between the cylindrical bore section 49 and the frustoconical shoulder 46 of the inner race 34 on the radial outside and a corresponsding profile of the output shaft 16 on the radial inside of the seal arrangement. This arrangement enhances the sealing function of the inner lip (51) around the output shaft 12.

In the assembly process of powertrain assembly 10, output shaft 12 is initially separate from CVJ assembly 14. A circlip 60 is installed onto output shaft splined end groove 22 (or initially installed into inner race groove 44). Splined end 18 is aligned with inner race splined bore 42 and inserted or "plugged in" to CVJ 14 (moving end 18 to the right as the components are illustrated in Figure 2). As output shaft 12 is plugged in, boot inner lip 51 is forced to expand, as inside cylindrical surface 52 is slid onto shaft section 17. Radial face 53 of seal lip 51 engages or "bottoms out" against output shaft radial face 20. Splined end 18 is advanced until there is a registration between circlip grooves 22 and 44, at which point the circlip 60 expands to lock the parts into their assembled position. In the installed position, inner lip 51 oblique face 55 contacts inner race frustoconical shoulder 46, and radial end face 61 is located at or near the radial step 47 of the inner race 36. The inner lip 51 is compressed between shaft shoulder 20 and inner race shoulder 46. Thus, seal assembly 48 seals directly against output shaft 12. The "plugging in" motion between output shaft 12 and CVJ assembly 14 positions, without additional action, seals boot 50 at its desired position, which is caused by its expansion and contact with inner race 34. This design is inherently reliable for assembly, since special steps are not required to properly orient and position seal assembly 48 into its desired position.

## Claims

1. A powertrain assembly (10) for use in a motor vehicle powertrain system, comprising;
an output shaft (12) forming a cylindrical shaft surface (16), a radial shoulder (20), and a splined end (18),
a CVJ assembly (14) having an inner race (34), and outer race (24), and ball elements (38) therebetween, the inner race (34) forming an inside splined bore (42) and a face surface (36), and
a seal assembly (48) having a boot (50) with an outer lip (54) affixed to the CVJ outer race (24) and an inner lip (51) forming first and second radial faces (53, 55) and an inside cylindrical surface (52), and
wherein axial insertion of the output shaft splined end (18) into the CVJ inner race splined bore (42) causes the inner lip (51) to be expanded and frictionally engaged with the output shaft cylindrical shaft surface (16) and wherein the boot inner lip (51) is axially clamped between the face surface (36) of the inner race (34) and the radial shoulder (20) of the output shaft (12) and radially overlaps with both the inner race (34) and the output shaft (12),
**characterized in that**
the face surface (36) of the inner race (34) is a frustoconical shoulder (46), which axially projects from a radial step (47) via a cylindrical bore section (49), and wherein a portion of the inner lip (51) is an axial sleeve extension (59) that extends into the cylindrical bore section (49), and
wherein the inner lip (51) is compressed between the radial shoulder (20) and the frustoconical shoulder (46).

2. The powertrain assembly (10) in accordance with claim 1, wherein the seal assembly (48) has a seal ring (56), wherein the outer lip (54) is bonded or otherwise affixed to the seal ring (56), and wherein the seal ring (56) is press fit onto the outer race (24) of the CVJ assembly (14).

3. The powertrain assembly (10) in accordance with claim 1, wherein the output shaft (12) and the inner race (34) form respective annular grooves (44) and receive a circlip (60) fitting within the grooves (44) when the assembly (10) is in an assembled condition.

4. The powertrain assembly (10) in accordance with claim 1, wherein the outer race (24) forms a tubular section (26) joined to a propeller shaft tube (28) by welding.

5. The powertrain assembly (10) in accordance with claim 1, wherein the output shaft (12) is coupled with a transmission or a transfer case.

## Patentansprüche

1. Antriebsstranganordnung (10) zur Verwendung in einem Antriebsstrangsystem eines Kraftfahrzeugs, umfassend:
eine Ausgangswelle (12), die eine zylindrische Wellenoberfläche (16), eine radiale Schulter (20) und ein Keilende (18) bildet,
eine CVJ-Anordnung (14) mit einem inneren Laufring (34), einem äußeren Laufring (24) und Kugelelementen (38) dazwischen, wobei der innere Laufring (34) eine innere Keilbohrung (42) und eine Außenseite (36) bildet, und
eine Dichtungsanordnung (48) mit einer Muffe (50) mit einer äußeren Lippe (54), die an dem äußeren CVJ-Laufring (24) befestigt ist, und einer inneren Lippe (51), die die erste und die zweite radiale Fläche (53, 55) und eine innere zylindrische Oberfläche (52) bildet, und
wobei eine axiale Einführung des Keilendes (18) der Ausgangswelle in die Keilbohrung (42) des inneren CVJ-Laufrings bewirkt, dass sich die innere Lippe (51) ausdehnt und mit der zylindrischen Wellenoberfläche (16) der Ausgangswelle reibschlüssig in Verbindung steht, und wobei die innere Lippe (51) der Muffe axial zwischen der Außenseite (36) des inneren Laufrings (34) und der radialen Schulter (20) der Ausgangswelle (12) eingeklemmt ist und sich sowohl mit dem inneren Laufring (34) als auch der Ausgangswelle (12) radial überschneidet,
**dadurch gekennzeichnet, dass**
die Außenseite (36) des inneren Laufrings (34) eine kegelstumpfförmige Schulter (46) ist, die axial von einer radialen Stufe (47) durch einen zylindrischen Bohrungsabschnitt (49) hervorsteht, und wobei ein Abschnitt der inneren Lippe (51) eine axiale Hülsenverlängerung (59) ist, die sich in den zylindrischen Bohrungsabschnitt (49) erstreckt, und
wobei die innere Lippe (51) zwischen der radialen Schulter (20) und der kegelstumpfförmigen Schulter (46) komprimiert ist.

2. Antriebsstranganordnung (10) nach Anspruch 1, wobei die Dichtungsanordnung (48) einen Dichtungsring (56) aufweist, wobei die äußere Lippe (54) an den Dichtungsring (56) gebunden oder anderweitig an diesem befestigt ist, und wobei der Dichtungsring (56) auf den äußeren Laufring (24) der CVJ-Anordnung (14) gepresst ist.

3. Antriebsstranganordnung (10) nach Anspruch 1, wobei die Ausgangswelle (12) und der innere Laufring (34) jeweilige Ringnuten (44) bilden und einen Sicherungsring (60) aufnehmen, der in die Nuten (44) passt, wenn sich die Anordnung (10) in einem zusammengebauten Zustand befindet.

4. Antriebsstranganordnung (10) nach Anspruch 1, wobei der äußere Laufring (24) einen röhrenförmigen Abschnitt (26) bildet, der durch Schweißen mit einem Antriebswellenrohr (28) verbunden ist.

5. Antriebsstranganordnung (10) nach Anspruch 1, wobei die Ausgangswelle (12) mit einem Getriebe oder einem Verteilergetriebe gekoppelt ist.

## Revendications

1. Assemblage de transmission (10) destiné à être utilisé dans un système de transmission de véhicule automobile, comprenant :
un arbre de sortie (12) formant une surface d'arbre cylindrique (16), un épaulement radial (20), et une extrémité cannelée (18),
un assemblage de joint homocinétique (14) ayant une bague intérieure (34), et une bague extérieure (24), et des éléments de roulement (38) entre elles, la bague intérieure (34) formant un alésage cannelé intérieur (42) et une face extérieure (36), et
un assemblage d'étanchéité (48) comportant un soufflet (50) avec une lèvre extérieure (54) fixée à la bague extérieure du joint homocinétique (24) et une lèvre intérieure (51) formant des première et seconde faces radiales (53, 55) et une surface cylindrique intérieure (52), et
dans lequel l'insertion axiale de l'extrémité cannelée de l'arbre de sortie (18) dans l'alésage cannelé de la bague intérieure du joint homocinétique (42) amène la lèvre intérieure (51) à être étendue et à se mettre en prise par friction avec la surface d'arbre cylindrique de l'arbre de sortie (16) et dans lequel la lèvre intérieure (51) du soufflet est pincée axialement entre la face extérieure (36) de la bague intérieure (34) et l'épaulement radial (20) de l'arbre de sortie (12) et chevauche radialement à la fois la bague intérieure (34) et l'arbre de sortie (12),
**caractérisé en ce que**
la face extérieure (36) de la bague intérieure (34) est un épaulement tronconique (46), qui fait saillie axialement à partir d'un gradin radial (47) par l'intermédiaire d'une section d'alésage cylindrique (49), et dans lequel une partie de la lèvre intérieure (51) est une extension en manchon axial (59) qui se prolonge dans la section d'alésage cylindrique (49), et
dans lequel la lèvre intérieure (51) est comprimée entre l'épaulement radial (20) et l'épaulement tronconique (46).

2. Assemblage de transmission (10) selon la revendication 1, dans lequel l'assemblage d'étanchéité (48) comporte une bague d'étanchéité (56), dans lequel la lèvre extérieure (54) est collée ou bien fixée à la bague d'étanchéité (56), et dans lequel la bague d'étanchéité (56) est pressée sur la bague extérieure (24) de l'assemblage de joint homocinétique (14).

3. Assemblage de transmission (10) selon la revendication 1, dans lequel l'arbre de sortie (12) et la bague intérieure (34) forment des rainures annulaires respectives (44) et reçoivent un circlip (60) s'insérant à l'intérieur des rainures (44) lorsque l'assemblage (10) est dans un état assemblé.

4. Assemblage de transmission (10) selon la revendication 1, dans lequel la bague extérieure (24) forme une section tubulaire (26) reliée à un tube d'arbre de transmission (28) par soudage.

5. Assemblage de transmission (10) selon la revendication 1, dans lequel l'arbre de sortie (12) est couplé à une boîte de vitesse ou une boîte de transfert.
